# EUROPÄISCHE PATENTSCHRIFT

(11) **EP 1 205 833 B1**
(45) Veröffentlichungstag und Bekanntmachung des Hinweises auf die Patenterteilung: **04.04.2007**
(21) Anmeldenummer: 01118777.0
(22) Anmeldetag: 09.08.2001
(51) Int. Cl.: G05D 23/19, G05D 23/02, G05D 23/30

(54) **Ventilgehäuse**
Valve housing
Corps de vanne

(30) Priorität: 07.11.2000 DE 10056076
(43) Veröffentlichungstag der Anmeldung: 15.05.2002
(73) Patentinhaber: Behr Thermot-tronik GmbH, 70806 Kornwestheim (DE)
(72) Erfinder: Friesenhahn, Waldemar, 70806 Kornwestheim (DE); Richter, Wolfgang, 70806 Kornwestheim (DE); Frunzetti, Barbu, 70806 Kornwestheim (DE)
(74) Vertreter: Patentanwälte Ruff, Wilhelm, Beier, Dauster & Partner

(56) Entgegenhaltungen:
- EP-A- 0 800 130
- EP-A- 0 853 267
- EP-A- 0 890 717
- EP-A- 1 207 283
- FR-A- 2 791 787
- PATENT ABSTRACTS OF JAPAN vol. 016, no. 284 (M-1270), 24. Juni 1992 (1992-06-24) & JP 04 073473 A (NIPPONDENSO CO LTD), 9. März 1992 (1992-03-09)
- PATENT ABSTRACTS OF JAPAN vol. 009, no. 275 (M-426), 2. November 1985 (1985-11-02) & JP 60 119319 A (NIHON THERMOSTAT KK), 26. Juni 1985 (1985-06-26)

## Beschreibung

Die Erfindung betrifft ein Ventilgehäuse eines Thermostatventils für einen Kühlmittelkreislauf eines Verbrennungsmotors mit elektrischen Verbindungsleitungen in dem Ventilgehäuse, wobei das Ventilgehäuse wenigstens teilweise aus einem Kunststoffmaterial besteht und die elektrischen Verbindungsleitungen in das Kunststoffmaterial des Ventilgehäuses eingebettet sind.

Aus der nicht vorveröffentlichten europäischen Offenlegungsschrift EP 1 207 283 ist ein Ventilgehäuse für ein Thermostatventil bekannt, das gemäß der dort gezeigten Fig. 4 elektrische Verbindungsleitungen zu einem beheizbaren Dehnstoffelement aufweist. Das Ventilgehäuse besteht aus Kunststoff und die elektrischen Verbindungsleitungen sind durch eine Wand des Ventilgehäuses hindurchgeführt und in das Kunststoffmaterial eingebettet. Die elektrischen Verbindungsleitungen münden an der Außenseite des Ventilgehäuses in eine Ausnehmung, die als Aufnahme für einen Stecker ausgebildet ist. Der Stecker kann unmittelbar auf die Enden der in das Material des Ventilgehäuses eingebetteten elektrischen Verbindungsleitungen aufgesteckt werden. Im Innenraum des Ventilgehäuses gehen die elektrischen Verbindungsleitungen in Verbindungsdrähte oder Verbindungsplatten über, die frei in eine Ausnehmung hineingeführt sind, in die dann ein elektrisch beheizbares Dehnstoffelement eingesteckt wird.

Aus der französischen Offenlegungsschrift FR 2 791 787 A1 ist ein Ventilgehäuse für ein Thermostatventil bekannt, bei dem ein elektrisch beheizbares Dehnstoffelement in eine Aufnahme im Inneren des Ventilgehäuses eingesteckt werden kann. Die Aufnahme ist so angeordnet, dass sie zusammen mit dem eingesteckten Dehnstoffelement in einen Kühlmittelstrom im Inneren des Ventilgehäuses hineinragt. Ausgehend von der Aufnahme ist ein Kabelkanal im metallischen Ventilgehäuse vorgesehen, der bis zu einer Außenwand des Ventilgehäuses geführt ist. In diesen Kabelkanal kann ein Anschlusskabel für das elektrisch beheizbare Dehnstoffelement eingeführt und damit auf die Außenseite des Gehäuses geführt werden. Auf das Anschlusskabel ist eine Kabelstopfbuchse aufgeschoben werden, die in einer passenden Ausnehmung in der Außenwand des Ventilgehäuses verankert ist.

Ventilgehäuse für Thermostatventile aus Kunststoff sind beispielsweise in der europäischen Offenlegungsschrift EP 0 800 130 A1 beschrieben.

Aus der deutschen Offenlegungsschrift DE 42 33 913 A1 ist ein Ventilgehäuse für ein Thermostatventil für einen Kühlmittelkreislauf eines Verbrennungsmotors bekannt, bei dem elektrische Versorgungsleitungen in dem Ventilgehäuse von einem Heizelement eines thermostatischen Arbeitselements ausgehen. Das Gehäuse des thermostatischen Arbeitselements ist stationär an dem Ventilgehäuse gehalten und die von dem Heizelement ausgehenden elektrischen Versorgungsleitungen sind in eine Kunststoffumhüllung des Gehäuses des thermostatischen Arbeitselements eingebettet. Die elektrischen Versorgungsleitungen sind in ihrem weiteren Verlauf durch das Ventilgehäuse dann durch einen Quersteg des Ventilgehäuses geführt, an dem sich das thermostatische Arbeitselement abstützt. Da das thermostatische Arbeitselement von Kühlwasser umströmt wird, werden hohe Anforderungen an eine Abdichtung eines Kabelkanals in dem Quersteg gestellt, damit kein Kühlwasser entlang der elektrischen Versorgungsleitungen aus dem Ventilgehäuse austreten kann. Um die elektrischen Versorgungsleitungen mit einer an einer Außenwand des Ventilgehäuses anzuordnenden Steckbuchse verbinden zu können, müssen diese deutlich länger sein als der Kabelkanal in dem Quersteg. Um die Steckbuchse dann an der Außenwand des Ventilgehäuses anzuordnen, muss diese Überlänge der Versorgungsleitungen in den Kabelkanal im Ventilgehäuse zurückgedrückt werden. Innerhalb des Kabelkanals sind die elektrischen Versorgungsleitungen damit lose und Vibrationen können zu einer Bewegung der Versorgungsleitungen und damit zu Geräuschentwicklung oder gar Beschädigung der Versorgungsleitungen führen.

Mit der Erfindung soll ein Ventilgehäuse für ein Thermostatventil hinsichtlich der Herstellbarkeit und Funktionssicherheit verbessert werden.

Erfindungsgemäß ist hierzu ein Ventilgehäuse eines Thermostatventils für einen Kühlmittelkreislauf eines Verbrennungsmotors mit elektrischen Verbindungsleitungen in dem Ventilgehäuse vorgesehen, bei dem das Ventilgehäuse wenigstens teilweise aus einem Kunststoffmaterial besteht und die elektrischen Verbindungsleitungen in das Kunststoffmaterial des Ventilgehäuses eingebettet sind und bei dem beide Enden der Verbindungsleitungen in das Kunststoffmaterial des Ventilgehäuses eingebettete elektrische Verbinder aufweisen.

Beispielsweise besteht ein Deckel des Thermostatventils aus Kunststoffspritzguss, und die Verbindungsleitungen für den Anschluss eines elektrischen Heizelements für ein thermostatisches Arbeitselement werden während des Herstellungsprozesses des Deckels eingespritzt. Die Verbindungsleitungen können aber beispielsweise auch in ein Kunststoffmaterial eingegossen werden. Indem die elektrischen Verbindungsleitungen in das Kunststoffmaterial eingebettet sind, können diese nicht klappern oder scheuern, so dass weder eine Geräuschentwicklung noch eine Beschädigung der Verbindungsleitungen durch Vibrationen zu befürchten ist. Darüber hinaus ist das Ventilgehäuse durch die Einbettung der Verbindungsleitungen in das Kunststoffmaterial abgedichtet, ohne dass eine zusätzliche Abdichtung erforderlich wäre. Auch ist keine zusätzliche Isolierung der Verbindungsleitungen erforderlich, da diese in das Kunststoffmaterial eingebettet sind. Durch die erfindungsgemäßen Maßnahmen ist das Ventilgehäuse äußerst funktionssicher und dabei rationell herstellbar. Die beiden Enden der Verbindungsleitungen weisen in das Kunststoffmaterial das Ventilgehäuse eingebettete elektrische Verbinder auf. Als elektrische Verbinder können beispielsweise Kontaktfahnen oder Buchsen vorgesehen sein, die durch die Einbettung in das Kunststoffmaterial elektrisch isoliert und gleichzeitig mechanisch belastbar angeordnet sind. Durch diese Maßnahmen wird die Herstellung des erfindungsgemäßen Ventilgehäuses weiter rationalisiert, da keine zusätzlichen Arbeitsschritte zum Anbringen von elektrischen Verbindern erforderlich sind.

In Weiterbildung der Erfindung ist vorgesehen, dass die elektrischen Verbindungsleitungen in ein Widerlager des Gehäuses eingebettet sind, das sich in einen von Kühlmittel durchströmbaren Innenraum des Ventilgehäuses erstreckt und an seinem Ende eine Aufnahme aufweist, in der elektrische Verbinder der Verbindungsleitungen eingebettet sind. Auf diese Weise können die elektrischen Verbindungsleitungen in den von Kühlmittel durchströmbaren Innenraum des Ventilgehäuses geführt werden, ohne dass Abdichtungsprobleme zu befürchten wären. Die Verbindungsleitungen können gleichzeitig mit der Herstellung des Ventilgehäuses eingespritzt und eingebettet werden. Beispielsweise kann das Widerlager eine Aufnahme für ein Gehäuse eines thermostatischen Arbeitselements oder für einen Arbeitskolben eines thermostatischen Arbeitselements aufweisen. Ob das Gehäuse des Arbeitselements selbst oder dessen Arbeitskolben in der Aufnahme angeordnet ist, hängt von der Bauart des Thermostatventils, nämlich mit stationärem oder beweglichem thermostatischen Arbeitselement, ab. Kontaktstifte des Arbeitselements oder eines Heizelements für den Arbeitskolben werden in die elektrischen Verbinder eingesteckt. Die Aufnahme weist vorzugsweise eine umlaufende Wandung auf, die eine Vertiefung definiert, an deren Boden die Verbinder angeordnet sind. Eine Dichtung des Gehäuses des Arbeitselements greift vorzugsweise an der umlaufenden Wandung der Aufnahme an.

In Weiterbildung der Erfindung ist vorgesehen, dass an einer Außenwand des Ventilgehäuses eine Verbinderaufnahme ausgebildet ist, in der elektrische Verbinder der Verbindungsleitungen eingebettet sind. Auf diese Weise kann eine Steckeraufnahme für den Anschluss einer externen Energieversorgung in das Ventilgehäuse integriert werden. Dadurch ist kein zusätzliches Bauteil erforderlich, um eine elektrische Verbindung zu ermöglichen.

In Weiterbildung der Erfindung sind die elektrischen Verbindungsleitungen Metallleisten. Solche Metallleisten, sogenannte Stromschienen, eignen sich aufgrund ihrer Eigenstabilität gut für das Einspritzen in Kunststoffmaterial während des Herstellungsprozesses des Gehäuses. Indem die Metallleisten um ihre Längsebene verdreht werden, lässt sich zum einen eine gute Verankerung im Kunststoffmaterial erreichen, zum anderen können die Metallleisten dadurch beliebig und in einfacher Weise abgewinkelt werden.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. In den Zeichnungen zeigen:
- Fig. 1: eine Schnittansicht eines Ventilgehäuses eines Thermostatventils gemäß einer ersten bevorzugten Ausführungsform der Erfindung und
- Fig. 2: elektrische Verbindungsleitungen gemäß einer zweiten bevorzugten Ausführungsform der Erfindung.

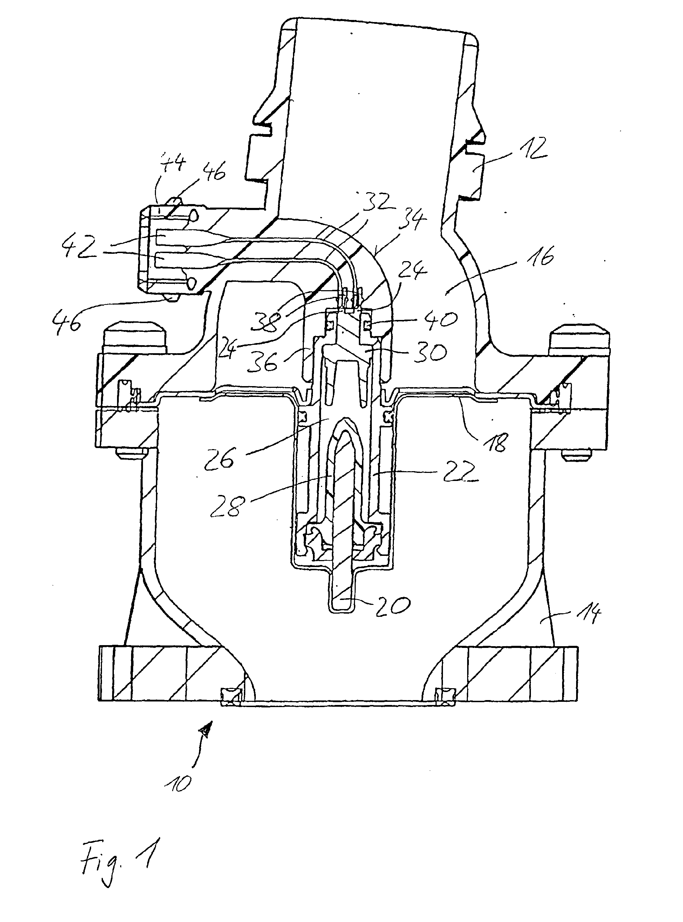

In der Darstellung der Fig. 1 ist ein Thermostatventil 10 in einer Schnittansicht dargestellt, das ein Ventilgehäuse mit einem Deckel 12 und einem Unterteil 14 aufweist. Der Deckel 12 besteht aus einem Kunststoffmaterial und ist mit dem Unterteil 14 durch Schrauben verbunden. Das Thermostatventil 10 ist im Kühlwasserkreislauf eines Verbrennungsmotor angeordnet, wobei das Kühlwasser einen Innenraum 16 des Thermostatventils 10 durchströmt. Zur Steuerung des Kühlwasserstroms durch den Innenraum 16 ist ein Ventilteller 18 vorgesehen, der mittels eines Arbeitskolbens 20 eines thermostatischen Arbeitselements 22 bewegt wird. Der Ventilteller 18 ist mittels einer aus Gründen der Übersichtlichkeit nicht dargestellten Feder in Richtung der in der Fig. 1 dargestellten Lage vorgespannt. Die Feder ist einerseits an dem Ventilteller 18, andererseits über ebenfalls nicht dargestellte und mit dem Ventilgehäuse verbundene Arme abgestützt.

Das thermostatische Arbeitselement 22 weist ein metallisches Gehäuse und einen mit Wachs 26 gefüllten Innenraum auf, in den sich eine sackartige Membran 28 erstreckt. Auf der dem Innenraum des thermostatischen Arbeitselements 22 abgewandten Seite der sackartigen Membran 28 ist die Arbeitskolben 20 des thermostatischen Arbeitselements angeordnet. Bei einer Erwärmung des Wachses 26 durch das den Innenraum 16 des Thermostatventils durchströmende Kühlwasser dehnt sich das Wachs 26 aus und verschiebt den Arbeitskolben 20 in der Darstellung der Fig. 1 nach unten. Dadurch wird der Ventilteller 18 ebenfalls nach unten bewegt und ein Strömungsweg durch das Thermostatventil 10 freigegeben.

Um die Kennlinie des thermostatischen Arbeitselements 22 zu beeinflussen, ist im Innenraum des thermostatischen Arbeitselements 22 ein Heizelement 30 vorgesehen, mit dem das Wachs 26 erwärmt und dadurch der Arbeitskolben 20 bewegt werden kann. Das Heizelement 30 weist Kontaktstifte 24 auf, die von einem Heizwiderstand im Innenraum des Gehäuses des thermostatischen Arbeitselements 22 zur Außenseite des thermostatischen Arbeitselementes führen. Um das Gehäuse des thermostatischen Arbeitselements im Bereich der Durchführung der Kontaktstifte 24 abzudichten, sind die Kontaktstifte 24 nach dem Einsetzen in das aus Messing bestehende Gehäuse des thermostatischen Arbeitselements 22 mit einer Kunststoffmasse vergossen. Dadurch ist das Gehäuse des thermostatischen Arbeitselements 22 abgedichtet und die Kontaktstifte 24 sind mechanisch festgelegt und elektrisch isoliert.

Eine Energiezufuhr zu den Kontaktstiften 24 des elektrischen Heizelements 30 erfolgt mittels elektrischer Verbindungsleitungen in Form von Stromschienen 32 aus Metallleisten, die in ein Widerlager 34 des Gehäuses eingebettet sind, das sich in den Innenraum 16 des Thermostatventils 10 erstreckt. Das Widerlager 34 erstreckt sich dabei ausgehend von einer dem Innenraum 16 zugewandten Wandung des Deckels 12 zunächst senkrecht zur Strömungsrichtung durch den Innenraum 16 in Richtung auf eine Mittelachse des Innenraums 16. Das Widerlager 34 ist im weiteren Verlauf abgewinkelt und verläuft dann im wesentlichen parallel zu der Strömungsrichtung im Innenraum 16 und der Mittelachse des Innenraums 16. An einem im Innenraum 16 liegenden Ende des Widerlagers ist eine Aufnahme für das thermostatische Arbeitselement 22 ausgebildet, die eine Umfangswandung 36 aufweist. Die Umfangswandung 36 umgibt eine Vertiefung, in deren Boden elektrische Verbinder 38 eingebettet sind, die die Kontaktstifte 24 des elektrischen Heizelements 30 des thermostatischen Arbeitselements 22 aufnehmen.

Zur Montage des thermostatischen Arbeitselements 22 wird dieses in die von der Umfangswandung 36 umgebene Vertiefung eingeführt, bis die Kontaktstifte 24 des elektrischen Heizelements 30 in den Verbindern 38 aufgenommen sind und eine am thermostatischen Arbeitselement 22 ausgebildete umlaufende Schulter an einem passenden Absatz der Umfangswandung 36 des Vorsprungs 34 anliegt. An die umlaufende Schulter des thermostatischen Arbeitselements 22 schließt sich ein zylindrischer Abschnitt mit geringerem Durchmesser an, der an seinem Umfang eine Dichtung 40 trägt, die mit einer Innenfläche der Umfangswandung 36 dichtend eingreift und die elektrischen Verbinder 38 mit den darin angeordneten Kontaktstiften 24 vor eindringendem Kühlwasser aus dem Innenraum 16 schützt.

Das Widerlager 34 des Deckels 12 besteht aus dem Kunststoffmaterial, und die Stromschienen 32 werden während der Herstellung des Deckels 12 in das Kunststoffmaterial des Widerlagers 34 eingespritzt. Ausgehend von den elektrischen Verbindern 38 am Boden der Vertiefung der Aufnahme folgen die Stromschienen 32 dem Verlauf des Widerlagers 34 und sind dabei im wesentlichen parallel zueinander angeordnet. In ihrem weiteren Verlauf in Richtung auf die Außenwand des Deckels 12 sind die Stromschienen 32 um ihre Längsachse um 90° verdreht. An ihrem jeweiligen, außerhalb des Deckels 12 liegenden Ende bilden die Stromschienen 32 jeweils eine Kontaktfahne 42 aus. Die Kontaktfahnen 42 sind dabei in einer Verbinderaufnahme 44 an der Außenseite des Deckels 12 angeordnet, die gleichzeitig mit der Herstellung des Deckels 12 ausgeformt wird. In die Verbinderaufnahme 44 kann ein Stecker einer Zuleitung eingesteckt werden. Zur Sicherung eines solchen Steckers weist die Verbinderaufnahme 44 an ihrer äußeren Umfangsfläche angespritzte Rastnasen 46 auf. Gleichzeitig mit der Herstellung des Deckels 12 durch einen Kunststoffspritzvorgang, werden damit die Verbinderaufnahme 44 und das Widerlager 34 mit der im Innenraum 16 liegenden Aufnahme für das thermostatische Arbeitselement 22 ausgeformt sowie die Stromschienen 32 mit den Kontaktfahnen 42 und den Verbindern 38 in das Kunststoffmaterial des Deckels 12 eingebettet und dadurch in dem Deckel 12 festgelegt und gleichzeitig elektrisch isoliert.

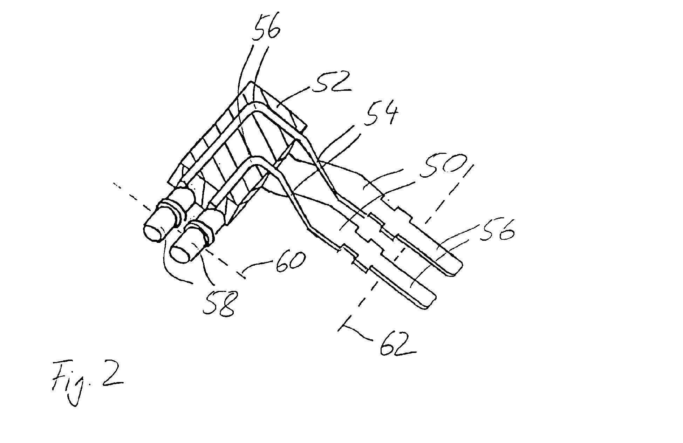

In der Darstellung der Fig. 2 sind Verbindungsleitungen 50 einer weiteren Ausführungsform der Erfindung dargestellt, die wie die in der Fig. 1 gezeigten Stromschienen aus Metallleisten gebildet sind. Die Verbindungsleitungen 50 sind in ein Kunststoffmaterial 52 eingebettet, das, entsprechend der Ausführungsform der Fig. 1, einen Deckel eines Ventilgehäuses für ein Thermostatventil bildet. Um die Verbindungsleitungen 50 besser darstellen zu können, ist lediglich ein quaderförmiger Ausschnitt des Kunststoffmaterials 52 dargestellt. Die Verbindungsleitungen 50 weisen jeweils einen Abschnitt 54 auf, indem sie um ihre Längsachse um 90° verdreht sind. Dadurch wird zum einen gute Verankerung der Verbindungsleitungen 50 in dem Kunststoffmaterial 52 erreicht. Zum anderen können die Stromschienen 50 dadurch in Abschnitten 56 um ihre Querachse in einfacher Weise abgewinkelt werden. Trotz der Anordnung von Kontaktfahnen 56 in einer gemeinsamen Ebene können die Verbindungsleitungen 50 dadurch rationell in der vorgegebenen Form gefertigt werden. An ihrem den Kontaktfahnen 56 gegenüberliegenden Ende sind die Verbindungsleitungen 50 jeweils mit einer Buchse 58 versehen. Die Buchsen 58 dienen zur Aufnahme von Kontaktstiften eines Heizelements für ein thermostatisches Arbeitselement. Um sowohl die Kontaktfahnen 56 als auch die Buchsen 58 sicher in dem Kunststoffmaterial 52 zu verankern, weisen die Buchsen 58 einen umlaufenden Bund und die Kontaktfahnen Vorsprünge auf, die bei der Herstellung des Ventilgehäuses in das Kunststoffmaterial 52 eingebettet werden. Um einen sicheren Halt zu gewährleisten, erstreckt sich das Kunststoffmaterial 52 dann bis zu einer gestrichelt angedeuteten Linie 60 bzw. 62.

## Patentansprüche

1. Ventilgehäuse eines Thermostatventils für einen Kühlmittelkreislauf eines Verbrennungsmotors mit elektrischen Verbindungsleitungen in dem Ventilgehäuse, wobei das Ventilgehäuse (12) wenigstens teilweise aus einem Kunststoffmaterial (52) besteht, und die elektrischen Verbindungsleitungen (32; 50) in das Kunststoffmaterial (52) des Ventilgehäuses (12) eingebettet sind, **dadurch gekennzeichnet, dass** beide Enden der Verbindungsleitungen (32; 50) in das Kunststoffmaterial (52) des Ventilgehäuses (12) eingebettete elektrische Verbinder (38, 42; 56, 58) aufweisen.

2. Ventilgehäuse nach Anspruch 1, **dadurch gekennzeichnet, dass** die elektrischen Verbindungsleitungen (32) in ein Widerlager (34) des Ventilgehäuses (12) eingebettet sind, das sich in einen von Kühlmittel durchströmbaren Innenraum (16) des Ventilgehäuses (12) erstreckt und an seinem im Innenraum (16) liegenden Ende eine Aufnahme aufweist, in der elektrische Verbinder (38) der Verbindungsleitungen (32) eingebettet sind.

3. Ventilgehäuse nach einem der vorstehenden Ansprüche, **dadurch gekennzeichnet, dass** an einer Aussenwand des Ventilgehäuses (12) eine Verbinderaufnahme (44) ausgebildet ist, in der elektrische Verbinder (42) der Verbindungsleitungen (32) eingebettet sind.

4. Ventilgehäuse nach einem der vorstehenden Ansprüche, **dadurch gekennzeichnet, dass** die elektrischen Verbindungsleitungen Metallleisten (32, 50) sind.

## Claims

1. A valve housing for a thermostatic valve for a coolant circuit of an internal combustion engine comprising: electrical connection leads in the valve housing, wherein the valve housing (12) at least partly consists of a plastic material and wherein the electrical connection leads (32; 50) are embedded in the plastic material (52) of the valve housing (12), **characterized in that** both ends of the electrical connection leads (32; 50) have electrical connectors (38, 42; 56, 58) being embedded in the plastic material (52) of the valve housing (12).

2. The valve housing according to claim 1, **characterized in that** the electrical connection leads (32) are embedded in an abutment (34) of the valve housing (12) which projects into an internal space (16) of the valve housing (12) being passed through by cooling agent and which has a receptacle at it's end being positioned in the internal space (16), the electrical connectors (38) of the electrical connection leads (32) being embedded in the receptacle.

3. The valve housing according to one of the preceding claims, **characterized in that** at an outer wall of the valve housing (12) a connecting receptacle (44) is formed, electrical connectors (42) of the electrical connection leads (32) being embedded in the connecting receptacle.

4. The valve housing according to one of the preceding claims, **characterized in that** the electrical connection leads are metal strips (32, 50).

## Revendications

1. Corps de vanne d'une vanne thermostatique pour un circuit de refroidissement d'un moteur à combustion avec lignes électriques de raccordement dans le corps de vanne, sachant que le corps de vanne (12) est constitué au moins en partie d'un matériau synthétique (52) et que les lignes électriques de raccordement (32 ; 50) sont enrobées dans le matériau synthétique (52) du corps de vanne (12), **caractérisé en ce que** les deux extrémités des lignes de raccordement (32 ; 50) présentent des connecteurs électriques (38, 42 ; 56, 58) enrobés dans le matériau synthétique (52) du corps de vanne (12).

2. Corps de vanne selon la revendication 1, **caractérisé en ce que** les lignes électriques de raccordement (32) sont enrobées dans une butée (34) du corps de vanne (12) qui s'étend dans une partie interne (16) du corps de vanne (12) pouvant être traversée par l'agent réfrigérant et présentant sur son extrémité située dans la partie interne (16) un logement dans lequel sont enrobés les connecteurs électriques (38) des lignes de raccordement (32).

3. Corps de vanne selon une des revendications précédentes, **caractérisé en ce qu'**est formé sur une paroi extérieure du corps de vanne (12) un logement pour connecteur (44) dans lequel sont enrobés les connecteurs électriques (42) des lignes de raccordement (32).

4. Corps de vanne selon une des revendications précédentes, **caractérisé en ce que** les lignes électriques de raccordement sont des barrettes métalliques (32, 50).
